# DEMANDE DE BREVET EUROPEEN

(11) **EP 2 368 468 A1**
(43) Date de publication de la demande: **28.09.2011**
(21) Numéro de dépôt: 11159559.1
(22) Date de dépôt: 24.03.2011
(51) Int. Cl.: A47J 37/07

(54) **Barbecue à gaz et pierres réfractaires, notamment pour la cuisson de brochettes japonaises**

(30) Priorité: 25.03.2010 FR 1052161
(71) Demandeur: Inter Cuisines, 94400 Vitry sur Seine (FR)
(72) Inventeur: Ma, Weile, 91400, ORSAY (FR)
(74) Mandataire: Kohn, Philippe

(57) **Abrégé**

L'invention propose un barbecue (10) à gaz, comportant :
- un bac de chauffage (12) formant foyer présentant une face supérieure ouverte vers le haut et qui loge au moins un brûleur à gaz, cette face supérieure étant délimitée par des zones (18, 22) d'appui pour les denrées à cuire ;
- une grille horizontale intermédiaire (24) située au-dessus dudit au moins un brûleur à gaz et sur laquelle sont posées des pierres réfractaires, notamment des pierres de lave, cette grille étant conformée pour protéger ledit au moins un brûleur des résidus de cuisson des denrées qui tombent verticalement à travers les pierres et la grille.

## Description

### DOMAINE TECHNIQUE DE L'INVENTION

La présente invention concerne un barbecue, aussi appelé grill, notamment pour la restauration collective, et dont la source de chaleur est le gaz.

L'invention concerne notamment un barbecue à gaz pour réaliser la cuisson des brochettes japonaises, aussi appelées « Yakitori ».

### ETAT DE LA TECHNIQUE

Dans la restauration collective, et notamment pour la cuisson des brochettes japonaises, il existe de nombreux cas, soit pour des raisons réglementaires, ou pour des raisons pratiques, dans lesquels la source de chaleur, ou foyer, d'un tel appareil de cuisson ne peut pas être du charbon de bois, bien que celui-ci soit souvent le plus apprécié, notamment pour la qualité de la cuisson et les aspects gustatifs qui en découlent.

Il existe ainsi un besoin pour proposer sur le marché, et notamment à destination de la restauration collective proposant des brochettes japonaises, un barbecue qui réponde aux besoins des clients, notamment restaurateurs, et en particulier à ceux qui n'ont pas le droit d'installer un barbecue à charbon de bois et/ou à ceux qui préfèrent utiliser le gaz pour la cuisson, notamment pour sa rapidité et sa simplicité d'utilisation.

Un tel barbecue doit bien entendu permettre la cuisson des brochettes avec des qualités, notamment gustatives, les plus proches possibles de celles obtenues lorsque le foyer utilise le charbon de bois, mais il doit aussi répondre à des standards de qualité et de fiabilité d'utilisation, en évitant notamment tous les problèmes d'entretien et d'obturation lorsque l'on utilise des brûleurs à gaz.

### BREF RESUME DE L'INVENTION

Dans ce but, l'invention propose un barbecue à gaz :
- un bac de chauffage formant foyer présentant une face supérieure ouverte vers le haut et une face inférieure ouverte vers le bas qui s'étend au-dessus d'au moins un brûleur à gaz, cette face supérieure étant délimitée par des zones d'appui pour les denrées à cuire ;
- une grille horizontale intermédiaire située au-dessus dudit au moins un brûleur à gaz et sur laquelle sont posées des pierres réfractaires, notamment des pierres de lave, cette grille étant conformée pour protéger ledit au moins un brûleur des résidus de cuisson des denrées qui tombent verticalement à travers les pierres et la grille.

Selon d'autres caractéristiques de l'invention :
- ledit au moins un brûleur comporte une rampe de brûleur réalisée sous la forme d'un tube horizontal percé dans sa partie supérieure de trous pour la formation de flammes qui s'étendent à travers la grille en direction des pierres réfractaires ;
- ledit tube s'étend longitudinalement, en la grille comporte une série de barreaux transversaux et horizontaux, et la grille comporte au moins un cache qui s'étend longitudinalement et qui est agencé verticalement au-dessus et au droit dudit tube ;
- la face supérieure du cache est conformée avec deux facettes inclinées formant un V inversé pour dévier latéralement les résidus de cuisson de part et d'autre dudit tube ;
- chaque brûleur comporte au moins deux rampes parallèles et coplanaires réalisées chacune sous la forme tube horizontal percé dans sa partie supérieure de trous ;
- la grille intermédiaire est réalisée en fonte ;
- le bac de chauffage est réalisé sous la forme d'un sous-ensemble extractible verticalement vers le haut pour donner accès audit au moins un brûleur ;
- le barbecue comporte, au-dessus de la face supérieure ouverte du bac de chauffe, des moyens de support de brochettes comportant une barre transversale supérieure intermédiaire d'orientation longitudinale dont le bord supérieur libre est un bord d'appui servant à poser les brochettes, et comportant une équerre longitudinale avant rapportée dont le bord supérieur libre est un autre bord d'appui servant à poser les extrémités libres des tiges des brochettes et qui est conformée en L pour protéger les mains de l'utilisateur ;
- la face verticale avant du barbecue est délimitée par une paire de parois verticales espacées pour permettre un refroidissement de la paroi extérieure par une circulation d'air par convection entre ces deux parois ;
- le barbecue comporte, en partie basse, un tiroir (60) à déchets, qui peut être rempli d'eau et qui est équipé d'un réflecteur thermique vers le haut.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective de trois-quarts avant gauche d'un exemple de réalisation d'un barbecue à gaz et à pierres réfractaires selon l'invention ;
- la figure 2 est une vue analogue à celle de la figure 1 sur laquelle certaines parties du barbecue ont été enlevées ;
- la figure 3 est une vue en perspective d'une demi grille du barbecue ;
- la figure 4 est une vue simplifiée, en section partielle par un plan vertical et transversal, qui illustre l'agencement et le positionnement de la grille par rapport aux rampes tubulaires d'un brûleur "double" ;
- la figure 5 est une vue schématique, selon le même angle que la figure 1, qui illustre certains composants du barbecue en partie en perspective éclatée ; et
- la figure 6 est une vue de détail à plus grande échelle qui illustre certains composants d'un demi circuit gaz, de droite, du barbecue de la figure 1 ;
- la figure 7 est une vue de détail à plus grande échelle en section par un plan vertical et transversal qui illustre différents agencements de détails du barbecue ;
- la figure 8 est une vue illustrant une variante de réalisation de la demi grille illustrée à la figure 3.

Dans la description qui va suivre, des composants identiques, analogues, ou similaires, seront désignés par les mêmes chiffres de référence.

Pour faciliter la compréhension de la description et des revendications, on utilisera à titre non limitatif, en référence à la gravité terrestre et au trièdre L, V, T indiqué sur les figures, les termes longitudinal, vertical, transversal, horizontal, etc.

On utilisera aussi les orientations gauche et droite en référence aux figures, ainsi que les termes avant et arrière selon l'orientation de l'axe transversal T.

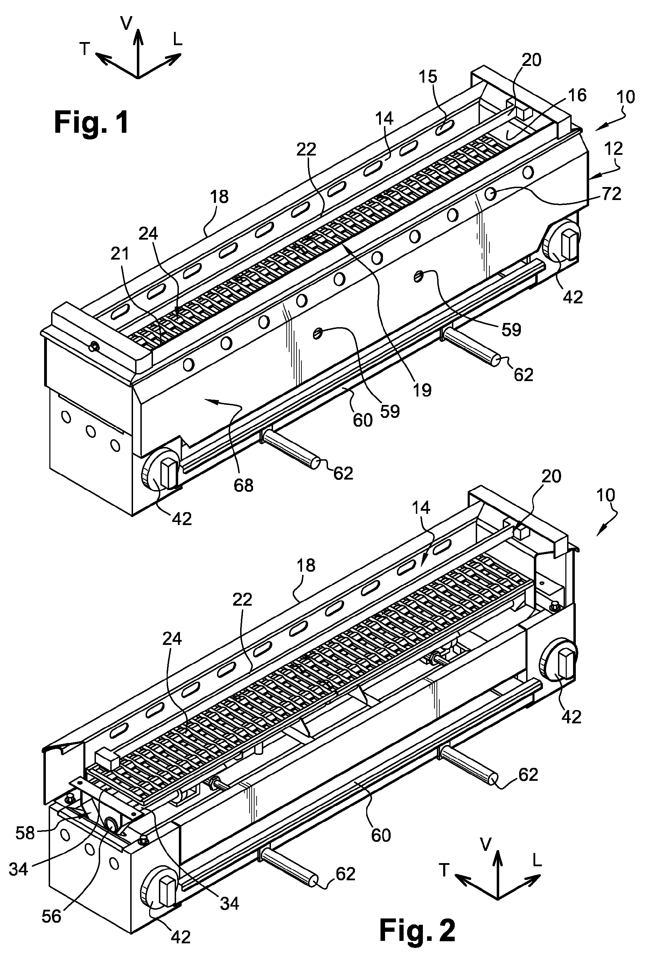

Le barbecue 10 illustré notamment aux figures 1 et 2 se présente sous la forme générale d'un bac ou puits de chauffe qui est de forme parallélépipédique rectangle 12, et qui peut notamment être posé sur un châssis inférieur (non représenté) en tubes permettant de supporter le bac 12 à hauteur d'homme, le support pouvant être muni de roulettes inférieures pour le déplacement du barbecue.

La plus grande longueur du bac 12 s'étend selon la direction longitudinale L et il est fermé sur toutes ses faces latérales verticales, ainsi que inférieure, à l'exception de sa face supérieure qui est ouverte vers le haut.

En partie haute, le bac 12 est délimité latéralement sur ses quatre côtés longitudinaux et transversaux par des parois verticales opposées longitudinales 14 et transversales 16 réalisées en acier réfractaire.

Les deux parois verticales et longitudinales opposées 14, avant et arrière, se terminent chacune par un bord, ou arrête, longitudinal supérieur libre 18, les deux bords 18 s'étendant dans le même plan horizontal.

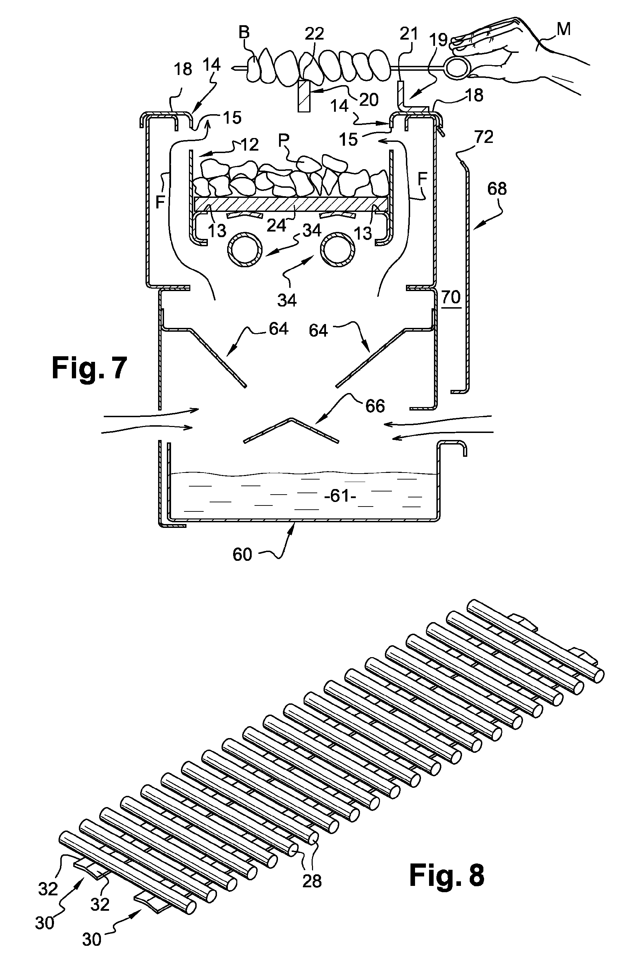

Comme on peut le voir plus en détails à la figure 7, le bord longitudinal supérieur libre 18 de la paroi avant 14, à droite de la figure 7, comporte une équerre longitudinale 19 rapportée à section en L dont le bord supérieur libre 21, d'orientation longitudinale, est un premier bord d'appui servant à poser les extrémités libres des tiges des brochettes B (voir figure 7), ces tiges étant bien entendu orientées selon la direction transversale T.

Comme cela est illustré sur les figures, il est prévu une barre transversale supérieure intermédiaire 20, d'orientation longitudinale, ici à mi-distance transversale entre les bords 18 mais dont la position est réglable transversalement en fonction de la longueur des brochettes à cuire, l'arête, ou bord supérieur longitudinal 22 de cette barre 20 s'étendant sensiblement dans le même plan que le bord 21 pour constituer les deux bords supérieurs d'appui pour les brochettes.

Les deux bords 21 et 22 sont situés sensiblement dans le même plan horizontal et l'équerre 19 en L constitue de plus une protection efficace contre la chaleur pour les mains M du cuisinier qui manipule les brochettes dont la partie libre des tiges s'étend horizontalement vers la droite en considérant la figure 7.

L'équerre 19 réalisée en tôle pliée réfractaire est de plus très peu sensible à la chaleur qui ne se transmet donc pas vers l'avant en direction du cuisinier.

En général, sur une brochette standard d'environ 15 cm de longueur, la partie recevant la nourriture à cuire, par exemple de la viande, correspond à environ 10 cm de longueur en laissant ainsi une longueur disponible aux extrémités.

A l'intérieur du bac 12, c'est-à-dire dans le volume délimité latéralement par les parois verticales 14 et 16, le barbecue 10 est équipé d'une grille intermédiaire horizontale 24 qui, selon l'invention possède deux fonctions principales.

Tout d'abord, la grille intermédiaire 24 délimite un plan supérieur horizontal pour la mise en place et la pose de pierres réfractaires P (voir figure 7) telles que des pierres de lave.

Ainsi, les pierres réfractaires reposent sur la grille 24 et sont situées au-dessus de cette grille à l'intérieur du volume délimité par les parois latérales 14 et 16 et en dessous du plan supérieur des bords 18.

De plus, comme cela sera expliqué par la suite en détail, la grille 24 a une deuxième fonction de protection des brûleurs à rampes à gaz du barbecue.

Comme cela est illustrée notamment à la figure 7, le puits supérieur de chauffe 12 est réalisé sous la forme d'un élément rapporté, en acier réfractaire, qui peut être extrait verticalement vers le haut pour son entretien.

Les parois latérales verticales d'orientation longitudinale 14 se terminent, à leurs extrémités inférieures, par des bords longitudinaux repliés vers l'intérieur 13 qui constituent des butées pour l'appui et la pose de la grille 24.

En partie haute, chaque paroi 14 comporte une série de trous 15 qui facilitent l'évacuation de la chaleur de la partie basse du barbecue, par convection selon les flèches F illustrées à la figure 7.

En cas de bouchage total ou partiel de la surface de cuisson, ce qui se produit lorsque les pierres de lave sont usagées et diminuent en taille ou bien lorsqu'il y a trop de brochettes en cuisson simultanée, l'air chaud est canalisé et dirigé par les côtés vers les brochettes, ce qui évite l'évacuation de l'air chaud en partie basse qui peut entraîner la surchauffe des parois latérales. On notera que l'ensemble du puits de chauffage est avantageusement extractible vers le haut en donnant directement accès aux brûleurs.

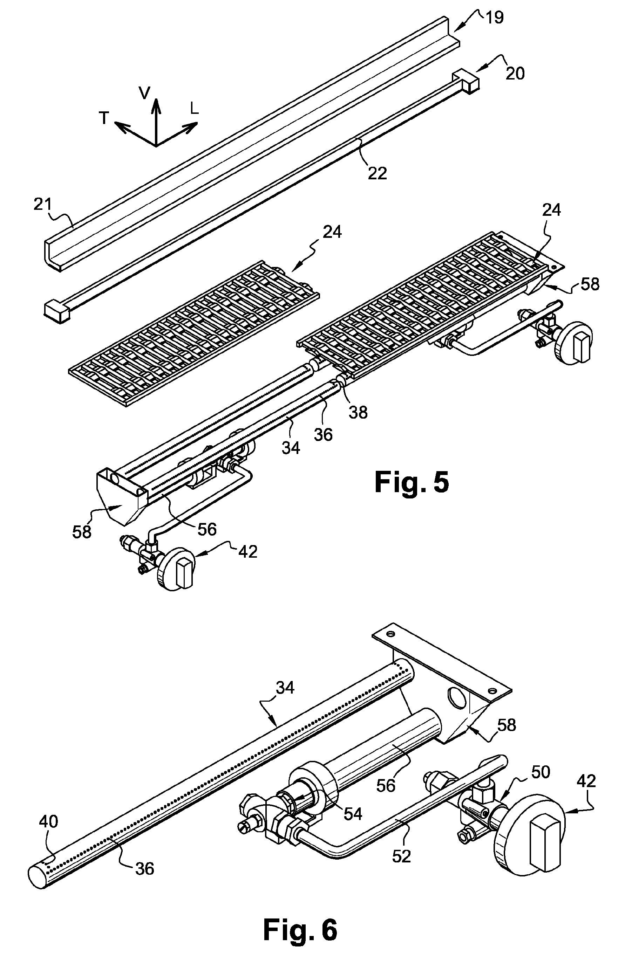

La grille 24 de support des pierres réfractaires et de protection des brûleurs à rampes peut être réalisée en une seule pièce ou, avantageusement pour sa manipulation, en deux parties gauche et droite comme illustré notamment à la figure 5.

De plus, cette réalisation en deux parties permet de réduire les inconvénients dus aux phénomènes de dilatation et de déformation thermiques des grilles.

La grille 24 est mise en place verticalement de haut en bas dans le puits ou logement délimité par les parois latérales 14, 16 et elle repose sur les butées 13 prévues à cet effet, de manière à permettre une mise en place, et un démontage, aisée de la grille 24, notamment pour son nettoyage. La grille intermédiaire est ainsi aménagée dans le fond du bac 12 au-dessus de sa face inférieure qui est ouverte vers le bas au-dessus des brûleurs.

Chaque grille se présente sous la forme d'une grille rectangulaire qui est délimitée par deux montants longitudinaux et horizontaux 26 qui sont reliés par une série de barreaux transversaux 28 sur les bords supérieurs desquels reposent les pierres réfractaires, et notamment les pierres de lave.

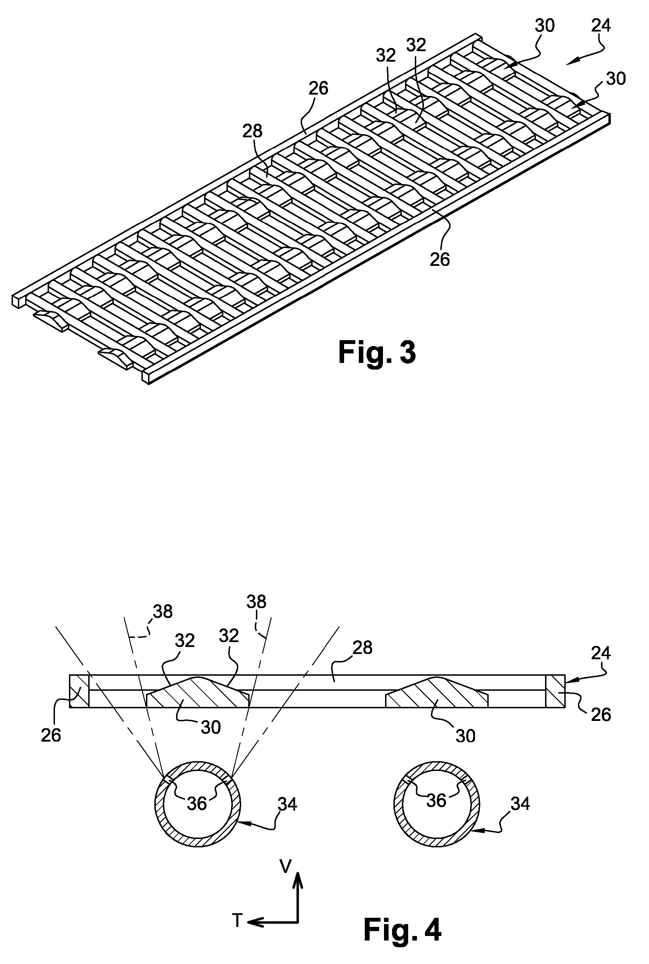

Dans la mesure où le barbecue décrit et représenté à titre non limitatif, comporte deux rampes tubulaires parallèles de brûleur, s'étendant longitudinalement, la grille 24 comporte ici, dans sa partie centrale, deux caches longitudinaux 30 agencés symétriquement et dont chacun, en position assemblée et montée de l'ensemble (voir figure 4), s'étend verticalement au droit d'une rampe tubulaire 34 de brûleur, et au-dessus d'une telle rampe tubulaire qui sera décrite par la suite.

La face supérieure de chaque cache longitudinal 30 est profilé en forme de V inversé de manière à délimiter, entre les barreaux 28, deux facettes inclinées 32, les angles d'inclinaison de ces faces inclinées 32 étant déterminés de manière que les flammes 38 puissent passer sur les côtés de chaque cache 30 tout en permettant à chaque cache 30 d'assurer sa fonction de protection de chaque rampe tubulaire associée de brûleur, et notamment des trous 36 de débit des flammes, notamment pour permettre l'évacuation latérale des retombées de sauces ou de graisses lors de la cuisson.

La grille 24 peut être réalisée de toutes manières convenables, mais elle est de préférence réalisée en fonte par moulage.

Chaque rampe longitudinale de brûleur est ici une rampe tubulaire 34 percée et alimentée en son centre par le gaz.

Chaque rampe ou tube 34 est percé sensiblement sur toute sa longueur, de deux séries de trous 36, ces trous étant espacés longitudinalement selon un pas régulier.

Les deux rangées de trous 36, en association avec les dimensions des caches, ou chapeaux, de protection 30 sont agencées selon un angle en V de manière que les flammes 38 puissent passer sur les côtés des caches 30 (voir figure 4).

Chaque tube 36 peut aussi comporter, à au moins une extrémité, des trous supplémentaires 40 permettant notamment un allumage aisé de chaque rampe tubulaire.

Dans la conception illustrée aux figures, le barbecue 10 est non seulement à deux rampes tubulaires parallèles 34 de, mais il est aussi double, c'est-à-dire qu'il présente une symétrie générale de conception par rapport à un plan vertical et transversal médian.

Cette répartition en deux moitiés symétriques n'est pas obligatoire et on peut envisager par exemple une répartition 1/3 - 2/3 en fonction des utilisations du barbecue.

Ainsi, le barbecue 10 est « double » avec une partie gauche comportant deux rampes parallèles avec leur alimentation en gaz commandée et individuelle, ainsi qu'un même sous-ensemble de partie droite, le bac, ou puits, 12 étant commun aux deux parties.

Comme on peut le voir notamment sur la figure 1, en face avant, chaque partie gauche et droite comporte notamment sa propre manette 42 de réglage du débit du gaz, et donc de réglage de la puissance de chauffe. Le barbecue peut être utilisé avec une seule moitié en fonctionnement.

Ainsi, d'un même côté, c'est-à-dire pour une partie gauche ou pour une partie droite, les deux rampes tubulaires parallèles 34 sont alimentées en commun par un « circuit gaz » qui sera maintenant décrit en référence aux figures 5 et 6.

Chaque circuit gaz comporte un robinet 50 de commande du débit du gaz associé à sa manette 42, alimentant par un tuyau 52, un injecteur 54 puis un tuyau longitudinal 56 et un distributeur/répartiteur 58, pour permettre l'injection simultanée du mélange gaz/air dans les deux rampes tubulaires parallèles 34 associées.

Le tube 56 est le tube mélangeur qui, en aval de l'injecteur, permet le mélange gaz/air.

Le fait d'agencer l'arrivée du gaz avec son robinet à une extrémité et l'injecteur au voisinage de l'autre extrémité permet une grande facilité d'assemblage de l'ensemble des composants.

Pour l'allumage indépendant des rampes, il est prévu des trous 59 à l'avant du barbecue 10.

Une fois que la grille 24 a été déposée, les rampes tubulaires 34, sont très aisément accessibles pour leur nettoyage.

Les rampes tubulaires avec les quelques composants des circuits gaz constituent, en dessous de la grille 24, les seuls composants agencés verticalement en dessous du bac de chauffe 12, de telle manière que l'ensemble des résidus de cuisson puissent chuter verticalement sans obstacles et être récupérés en partie inférieure du bac 12.

On notera que, du point de vue de la sécurité, le barbecue à gaz selon l'invention ne produit aucune flamme latérale qui pourrait être dangereuse pour le cuisinier.

En effet, du fait de la protection des trous 36 des rampes tubulaires 34, ceux-ci ne sont pas bouchés, le bouchage aboutissant généralement à la formation de flammes latérales et de points de surchauffe qui sont dangereux.

Ainsi encore, la cuisson grâce au barbecue 10 selon l'invention est homogène sur toute la longueur du barbecue et sur toute la longueur des brochettes.

Selon une variante de conception représentée à la figure 8, la grille 24 peut être constituée par une série de barreaux transversaux 28 soudés sur deux barres longitudinales parallèles 30 conformées comme les barres 30 décrites précédemment.

En partie basse, il est prévu un tiroir inférieur 60 amovible horizontalement qui peut être extrait au moyen des poignées 62.

Le tiroir est rempli d'eau 61 pour faciliter le refroidissement et à la surface de laquelle flottent les graisses et résidus de cuisson qui, ainsi, n'encrassent pas le fond du tiroir. De plus l'eau fait fonction d'amortisseur thermique et permet d'éviter la déformation du tiroir.

Comme on peut le voir à la figure 7, au-dessus du tiroir inférieur amovible 60 qui est agencé en partie basse, il est prévu différents agencements en tôle pliée évitant la surchauffe, avec risque d'inflammation, des résidus et dépôts, notamment graisseux, contenus dans le tiroir 60.

A cet effet, comme on peut le voir à la figure 7, il est prévu deux tôles longitudinales opposées 64 qui s'étendent longitudinalement et présentent chacune un profil incliné de manière, d'une part, à guider centralement les résidus de cuisson qui chutent en direction du tiroir 60 et, d'autre part, à constituer des réflecteurs de la chaleur diffusée par les rampes 34 et l'ensemble du foyer constitué par les pierres de lave au-dessus de la grille 24.

Ainsi, globalement, l'essentiel de la chaleur en partie basse est renvoyée vers le haut en direction du foyer et aussi selon les flèches F.

En dessous de deux tôles latérales opposées 64, il est prévu de plus une tôle centrale 66 qui s'étend longitudinalement et qui présente en section un profil en V renversé.

Cette tôle permet bien entendu la continuité de la chute des résidus vers le réservoir 60 tout en permettant, par ses faces supérieures inclinées, à nouveau un effet de renvoi de la chaleur vers le haut. Cette tôle peut être intégrée au tiroir 60 et être amovible avec celui-ci.

Toujours dans le cadre de la maîtrise de la chaleur dans l'ensemble du barbecue, et notamment pour protéger les utilisateurs que sont les cuisiniers, en partie avant, le barbecue est équipé d'une tôle externe d'orientation verticale et longitudinale de protection 68 qui est située à distance transversale, vers la droite, en considérant la figure 7, du puits de chauffage proprement dit.

La tôle de protection 68 délimite ainsi un passage 70, ouvert vers le haut par une série de trous 72.

Ainsi, la tôle 68 est une tôle constitue une paroi extérieure « froide » car elle est isolée du foyer par le passage d'air 70, celui-ci permettant de plus une circulation de la chaleur par convection vers le haut.

## Revendications

1. Barbecue (10) à gaz, notamment pour la cuisson de brochettes comportant :
- un bac de chauffage (12) formant foyer présentant une face supérieure ouverte vers le haut et une face inférieure ouverte vers le bas qui s'étend au-dessus d'au moins un brûleur à gaz qui comporte une rampe de brûleur réalisée sous la forme d'un tube horizontal (34) qui s'étend longitudinalement et qui est percé de trous (36) pour la formation de flammes, cette face supérieure du bac de chauffage étant délimitée par des zones (18, 22) d'appui pour les denrées à cuire ;
- une grille horizontale intermédiaire (24) située au-dessus dudit au moins un brûleur à gaz et qui comporte une série de barreaux transversaux (28) et horizontaux sur lesquels sont posées des pierres réfractaires, notamment des pierres de lave, cette grille étant conformée pour protéger ledit au moins un brûleur des résidus de cuisson des denrées qui tombent verticalement à travers les pierres et la grille, lesdites flammes s'étendant à travers la grille (24) en direction des pierres réfractaires.

2. Barbecue selon la revendication 1, caractérisé en ce la grille comporte au moins un cache de protection (30) qui s'étend longitudinalement et qui est agencé verticalement au-dessus et au droit dudit tube (34).

3. Barbecue selon la revendication 2, **caractérisé en ce que** la face supérieure du cache de protection (30) est conformée avec deux facettes inclinées (32) formant un V inversé pour dévier latéralement les résidus de cuisson de part et d'autre dudit tube.

4. Barbecue selon l'une des revendication 2 ou 3, **caractérisé en ce que** le tube (34) est percé sensiblement sur toute sa longueur, de deux séries de trous (36) qui sont espacés longitudinalement et qui, en association avec les dimensions du cache de protection (30), sont agencées selon un angle en V de manière que les flammes (38) puissent passer sur les côtés du cache de protection (30).

5. Barbecue selon l'une quelconque des revendications 1 à 4, **caractérisé en ce que** chaque brûleur comporte au moins deux rampes parallèles et coplanaires réalisées chacune sous la forme tube horizontal (34) percé dans sa partie supérieure de trous (36).

6. Barbecue selon la revendication 1, **caractérisé en ce que**, **caractérisé en ce que** la grille intermédiaire est réalisée en fonte, ou est constituée par une série de barreaux transversaux (28) soudés sur deux barres longitudinales parallèles..

7. Barbecue selon la revendication 1, **caractérisé en ce que** le bac de chauffage (12) est réalisé sous la forme d'un sous-ensemble extractible verticalement vers le haut pour donner accès audit au moins un brûleur.

8. Barbecue selon la revendication 1, **caractérisé en ce qu'**il comporte, au-dessus de la face supérieure ouverte du bac de chauffe (12), des moyens de support de brochettes comportant une barre transversale supérieure intermédiaire (20) d'orientation longitudinale dont le bord supérieur libre (22) est un bord d'appui servant à poser les brochettes (B), et comportant une équerre longitudinale avant (19) rapportée dont le bord supérieur libre (21) est un autre bord d'appui servant à poser les extrémités libres des tiges des brochettes (B) et qui est conformée en L pour protéger les mains de l'utilisateur.

9. Barbecue selon la revendication 1, **caractérisé en ce que** la face verticale avant du barbecue est délimitée par une paire de parois verticales espacées pour permettre un refroidissement de la paroi (68) extérieure par une circulation d'air par convection entre ces deux parois.

10. barbecue selon la revendication 1, **caractérisé en ce qu'**il comporte, en partie basse, un tiroir (60) à déchets, qui peut être rempli d'eau et qui est équipé d'un réflecteur thermique (66) vers le haut.
